# EUROPÄISCHE PATENTSCHRIFT

(11) **EP 1 732 795 B1**
(45) Veröffentlichungstag und Bekanntmachung des Hinweises auf die Patenterteilung: **26.12.2012**
(21) Anmeldenummer: 05716589.6
(22) Anmeldetag: 20.01.2005
(51) Int. Cl.: B60T 8/00, B60T 7/22, B60T 8/88

(54) **BREMS-STEUERSYSTEM FÜR KRAFTFAHRZEUGE**
BRAKE CONTROL SYSTEM FOR MOTOR VEHICLES
SYSTEME DE COMMANDE DE FREINAGE POUR VEHICULES AUTOMOBILES

(30) Priorität: 27.03.2004 DE 102004015114
(43) Veröffentlichungstag der Anmeldung: 20.12.2006
(73) Patentinhaber: ROBERT BOSCH GMBH, 70442 Stuttgart (DE)
(72) Erfinder: HEINEBRODT, Martin, 70176 Stuttgart (DE); RANDLER, Martin, 70569 Stuttgart (DE)
(86) Internationale Anmeldenummer: PCT/EP2005/050225
(87) Internationale Veröffentlichungsnummer: WO 2005/092682

(56) Entgegenhaltungen:
- US-B1- 6 208 106
- US-B1- 6 304 808
- US-B1- 6 357 839

## Beschreibung

### Stand der Technik

Die Erfindung betrifft ein Brems-Steuersystem für Kraftfahrzeuge, mit einem Stabilitätssystem zur fahrdynamischen Stabilisierung des Fahrzeugs bei Bremsvorgängen, einer Auslöseeinheit zur automatischen Ausgabe einer Bremsanforderung in Abhängigkeit von der Verkehrssituation, und einer Bremseinheit, die die Bremsanforderung in eine Bremsaktion umsetzt.

Moderne Kraftfahrzeuge weisen zumeist ein elektronisches Stabilitätssystem, beispielsweise ABS (An tiblockiersystem) und/oder ESP (elektronisches Stabilitätsprogramm) auf, das insbesondere bei Bremsvorgängen für eine fahrdynamische Stabilisierung des Fahrzeugs sorgt und so den Fahrer bei der Führung des Fahrzeugs unterstützt. Die Aktionen dieser Stabilitätssysteme sind im allgemeinen vom Fahrer weder zu beeinflussen noch zu übersteuern.

Andererseits gibt es Assistenzsysteme, die den Fahrer auf einer anderen Ebene bei der Führung des Fahrzeugs unterstützen. Beispiele solcher Assistenzsysteme sind sogenan nte ACC-Systeme (Adaptive Cruise Control), die eine automatische Geschwindigkeitsregelung sowie eine automatische Abstandsregelung auf das vorausfahrende Fahrzeug ermöglichen, Warnsysteme, die den Fahrer vor kritischen Verkehrssituationen warnen, Pre-Crash-Systeme, die im Fall einer bevorstehenden Kollision automatisch Aktionen zur Abwendung der Kollision oder zur Milderung der Kollisionsfolgen auslösen, und dergleichen. Diese Assistenzsysteme weisen zur Erfassung der Verkehrssituation im allgemeinen eine Umfeldsensorik auf, beispielsweise in der Form von Radarsensoren, Videosystemen mit elektronischer Bildverarbeitung und dergleichen, und greifen je nach der erfaßten Verkehrssituation mehr oder minder stark in das Antriebssystem und erforderlichenfalls auch in das Bremssystem des Fahrzeugs ein. Diese Systeme lassen sich im allgemeinen vom Fahrer deaktiveren, und ihre Befehle sind vom Fahrer übersteuerbar.

Für den Eingriff in das Bremssystem weisen die Assistenzsysteme eine Auslöseeinheit auf, die situations abhängig eine Bremsanforderung ausgibt, die dann von der Bremseinheit des Fahrzeugs in die entsprechende Bremsaktion umgesetzt wird. Die Stärke der Bremsaktion kann dabei in einem weiten Bereich variieren und reicht von sanften Bremsvorgängen zur Anpassung an die Geschwindigkeit des vorausfahrenden Fahrzeugs über kurze Warnbremsungen, die als kinästhetisches Warnsignal für den Fahrer dienen, bis hin zu automatisch ausgelösten Notbremsungen. Bei diesen Bremsaktionen behält der Fahrer im allgemeinen die Kontrolle zumindest über die Lenkung des Fahrzeugs, so daß er Ausweichmanöver von Hand vornehmen kann. Erforderlichenfalls sorgt dabei das Stabilitätssystem automatisch für die dynamische Stabilisierung des Fahrzeugs, so daß das Fahrzeug nicht außer Kontrolle gerät.

Aus der US 6,3573839 ist eine Koordinationseinrichtung für Sollwerte für Bremse und/oder Motor eineds Kraftfahrzeugs bekannt. Ausgegangen wird von einem System, in dem verschiedene Komponenten zur Regelung der Längsdynamik eines Fahrzeugs beitragen. Erfindungsgemäß erzeugen diese Komponenten parallel zueinander Zwischen-Sollwerte für Bremse und/oder Motor. Koordinationseinrichtungen erzeugen nach Maßgabe der an ihnen anliegenden Zwischen-Sollwerte Motor- bzw. Brems-Sollwerte, die an die entsprechenden Komponenten ausgegeben werden.

Aus der US 6,304,808 ist ein Steuerystem zur Bremsensteuerung und zur Steuerung von ACC-Funktionen in einem Kraftfahrzeug bekannt. Ein erster Signalprozessor empfängt Signale von mindestens einem Sensor und gibt Sifgnale zur bremsensteuerung ab. Ein zweiter Signalprozessor empfängt ebenfalls Signale von mindestens einem Sensor und gibt Signale für die ACC-regelung ab. Die Ausgabesignale der beiden Signalprozessoren werden über eine bidirektionale Schnittstelle zwischen beiden Signalprozessoren ausgetauscht.

### Vorteile der Erfindung

Die Erfindung mit den in Anspruch 1 angegebenen Merkmalen bietet den Vorteil, daß die Stabilität des Fahrzeugs bei aktiviertem Assistenzsystem auch dann sichergestellt werden kann, wenn die Funktionen des Stabilitätssystems nicht oder nur in eingeschränkten Umfang zur Verfügung stehen.

Zu diesem Zweck weist das erfindungsgemäße Brems -Steuersystem eine Kontrolleinheit auf, die die Bremsanforderung der Auslöseeinheit vor ihrer Umsetzung in Abhängigkeit vom Zustand des Stabilitätssystems modifiziert

Wenn das Stabilitätssystem nicht in vollem Umfang funktionsfähig ist, sorgt so die Kontrolleinheit dafür, daß die Bremsanforderung so modifiziert wird, daß dennoch die Fahrstabilität gewährleistet wird. Auf diese Weise werden Komfortbeeinträchtigungen und insbesondere Gefahrensituationen vermieden, die sich sonst durch die mangelnde Stabilität des Fahrzeugs ergeben könnten.

Vorteilhafte Ausgestaltungen der Erfindung ergeben sich aus den Unteransprüchen.

Im einfachsten Fall besteht die Modifikation der Bremsanforderung darin, daß die Bremsanforderung vollständig unterdrückt wird, wenn das Stabilitätssystem oder Teile desselben defekt oder nicht aktiv sind. Je nach Art und Ausmaß der Funktionsbeeinträchtigung des Stabilitätssystems kann d ie Modifikation der Bremsanforderung jedoch auch in der Weise erfolgen, daß das Ausmaß der Bremsanforderung auf Werte begrenzt wird, bei denen keine Beeinträchtigung der Stabilität zu befürchten ist.

Ein maßgeblicher Parameter für die Stabilität des Fahrz eugs ist der Reibungskoeffizient p zwischen Fahrbahn und Reifen. Dieser Reibungskoeffizient p wird normalerweise im Rahmen der Funktion eines ABS-Systems oder ESP-Systems ermittelt. Es sind jedoch auch spezielle Sensoren bekannt, mit denen zumindest ein Schätzwert für den Reibungskoeffizienten p auch unabhängig von der Funktion des Stabilitätssystems gewonnen werden kann. Sofern ein Schätzwert für den Reibungskoeffizienten zur Verfügung steht, besteht eine zweckmäßige Modifikation der Bremsanforderung darin, daß die implizit durch die Bremsanforderung angegebene Bremsverzögerung oder der Bremsdruck auf einen vom Reibungskoeffizienten abhängigen Grenzwert begrenzt wird. Dieser Grenzwert kann auch von weiteren Zustandsgrößen des Fahrzeugs abhängig sein, beispi elsweise von der Fahrgeschwindigkeit V, der Zuladung und dergleichen.

Die Kontrolleinheit zur Modifikation der Bremsanforderung kann Bestandteil der Auslöseeinheit oder Bestandteil der Bremseinheit sein, sie kann jedoch auch als separate Einheit ausgebild et sein und über eine Kommunikationseinrichtung, beispielsweise einen Datenbus, mit der Auslöseeinheit und/oder der Bremseinheit in Verbindung stehen.

### Zeichnung

Ausführungsbeispiele der Erfindung sind in den Zeichnungen dargestellt und in der nachfolgenden Beschreibung näher erläutert.

Es zeigen:
- Figuren 1 bis 3: Blockdiagramme von Ausführungsbeispielen des erfindungsgemäßen Brems-Steuersystems: und
- Figur 4: eine Tabelle zur Erläuterung der Funktionsweise des Brems-Steuersystems.

### Beschreibung des Ausführungsbeispiels

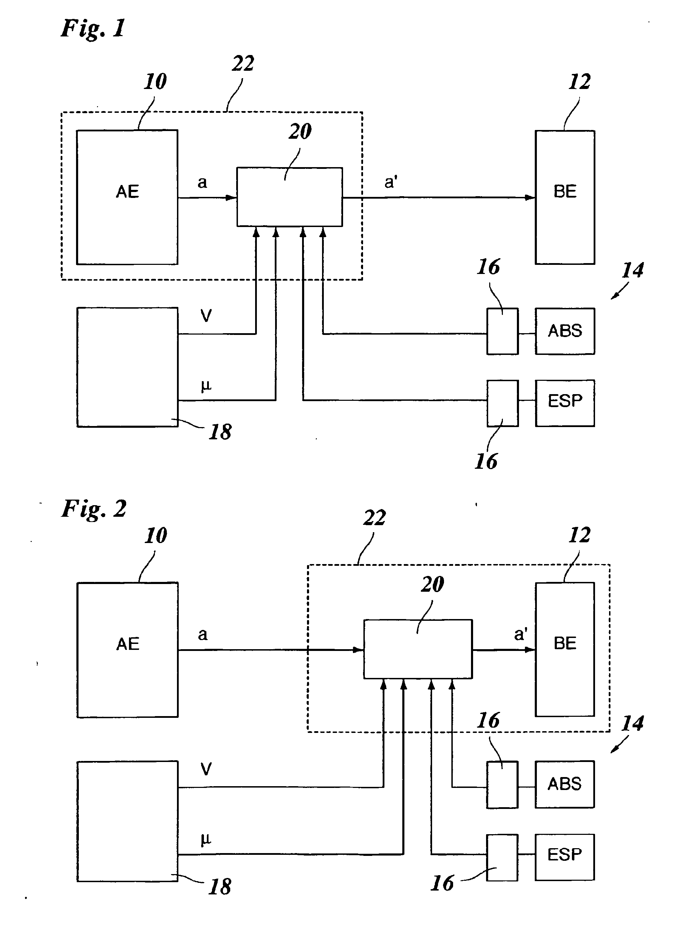

Das in Figur 1 gezeigte Brems-Steuersystem umfaßt als Hauptkomponenten eine Auslöseeinheit 10 und eine Bremseinheit 12. Bei diesen Einheiten kann es sich um getrennte Hardwarekomponenten oder ggf. auch um verschiedene Programm - Module einer integrierten elektronischen Datenverarbeitungseinrichtung handeln. Die Auslöseeinheit 10 kann beispielsweise durch ein ACC-System oder irgendein anderes Assistenzsystem gebildet werden, das in der Lage ist, in das Bremssystem des Fahrzeugs einzugreifen und zu d iesem Zweck eine Bremsanforderung a an die Bremseinheit 12 auszugeben. Nach Maßgabe dieser Bremsanforderung a steuert dann die Bremseinheit 12 die Bremskraft an den Rädern des Fahrzeugs. Bei der Bremsanforderung a handelt es sich somit um ein Signal, das quantitativ die Stärke des Bremseingriffes angibt, beispielsweise in der Form einer Soll -Bremsverzögerung, eines Soll-Bremsdruckes oder dergleichen.

Zu dem Brems-Steuersystem gehört weiterhin ein Stabilitätssystem 14, das im gezeigten Beispiel zwei elektron ische Regeleinrichtungen ABS (Antiblockiersystem) und ESP (Elektronisches Stabilitätsprogramm) umfaßt. Durch das Antiblockiersystem ABS wird der Bremsdruck an den Rädern so moduliert, daß ein Blockieren der Räder verhindert wird. Das elektronische Stabilitätsprogramm ESP wertet die fahrdynamischen Daten des Fahrzeugs, insbesondere die Geschwindigkeit V, die Querbeschleunigung und/oder Gierrate des Fahrzeugs und dergleichen aus und steuert den Bremseingriff an den einzelnen Rädern so, daß die dynamische Stabilität des Fahrzeugs insbesondere bei Kurvenfahrten oder bei unterschiedlicher Griffigkeit der Fahrbahn auf der rechten und linken Fahrzeugseite erhalten bleibt und somit ein Ausbrechen des Fahrzeugs verhindert wird. Den beiden Regeleinrichtungen ABS und ESP ist jeweils ein Überwachungsmodul 16 zugeordnet, das ständig überprüft, ob die betreffende Regeleinrichtung eingeschaltet und funktionsfähig ist.

Weiterhin ist in Figur 1 symbolisch ein Datenerfassungssystem 18 dargestellt, das fahrdynamische Daten de s Fahrzeugs erfaßt, beispielsweise die Fahrzeuggeschwindigkeit V. Als Beispiel sei hier angenommen, daß das Datenerfassungssystem 18 auch in der Lage ist, den Reibungskoeffizienten p der Fahrbahn oder zumindest einen Schätzwert hierfür (gemittelt über sämt liche Fahrzeugräder) zu ermitteln.

Die oben beschriebenen Komponenten des Brems -Steuersystems und ihre Funktionsweise sind als solche bekannt und werden deshalb hier nicht näher beschrieben. Die Besonderheit des hier gezeigten Systems besteht darin, daß d ie Bremsanforderung a nicht direkt an die Bremseinheit 12, sondern an eine Kontrolleinheit 20 übermittelt wird, die auch Informationen von den Überwachungsmodulen 16 und vom Datenerfassungssystem 18 erhält und anhand dieser Informationen die Bremsanforderu ng a in eine modifizierte Bremsanforderung a' umwandelt, die dann an die Bremseinheit 12 weitergeleitet wird. Die Überwachungsmodule 16 melden an die Kontrolleinheit 20, ob die jeweilige Regeleinrichtung (ABS oder ESP) eingeschaltet und funktionsfähig ist oder ob sie abgeschaltet oder defekt ist. Gegebenenfalls kann auch detailliertere Information über die Art des Defekts und den Umfang der Funktionsfähigkeit der Regeleinrichtung übermittelt werden. Vom Datenerfassungssystem 18 erhält die Kontrolleinheit 20 Information über den Reibungskoeffizienten µ und beispielsweise über die Fahrzeuggeschwindigkeit V.

In dem in Figur 1 gezeigten Beispiel ist die Kontrolleinheit 20 in die Auslöseeinheit 10 integriert, wie durch einen gestrichelten Rahmen 22 angedeutet wird.

Figur 2 zeigt ein abgewandeltes Ausführungsbeispiel, bei dem die Kontrolleinheit 20 in die Bremseinheit 12 integriert ist.

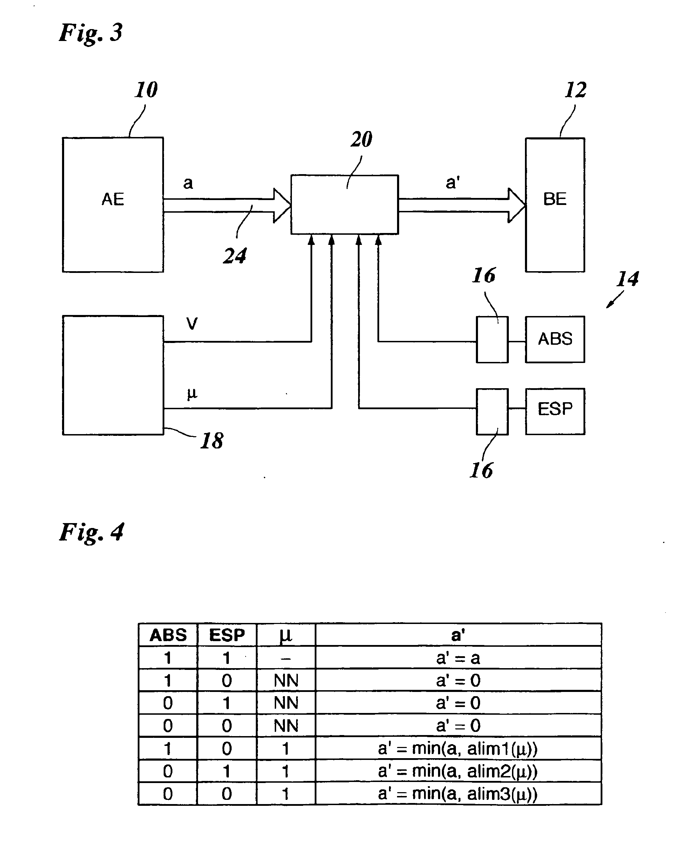

Figur 3 zeigt ein weiteres Ausführungsbeispiel, bei dem die Kontrolleinheit 20 als separate Einheit ausgebildet ist, die über eine Kommunikationseinrichtung 24, etwa einen Datenbus (z.B. CAN-Bus) mit der Auslöseeinheit 10 und der Bremseinheit 12 kommuniziert. Ebenso ist es denkbar, daß die Kontrolleinheit 20 nur mit an der Auslöseeinheit 10 oder nur mit der Bremseinheit 12 kommuniziert und jeweils die modifizierte Bremsanforderung a' an diese Einheit zurückmeldet. Auch die Kommunikation mit den übrigen Komponenten des Systems kann über den Datenbus erfolgen.

In Figur 4 ist in Tabellenform ein Beispiel für die Funktionsweise der Kontrolleinheit 20 dargestellt. Ein Eintrag "1" in der ersten Spalte "ABS" bedeutet, daß das Antiblockiersystem eingeschaltet und funktionsfähig ist. Ein Eintrag "0" in dieser Spalte bedeutet, daß das Antiblockiersystem entweder abgeschaltet oder defekt ist. Entsprechendes gilt für die Einträge in der zweiten Spalte "ESP" für das elektronische Stabilitätsprogramm. Ein Eintrag "1" in der dritten Spalte "µ" bedeutet, daß Information über den Reibungskoeffizienten p der Fahrbahn verfügbar ist. Ein Eintrag "NN" bedeutet hier, daß diese Information nicht verfügbar ist. Ein Eintrag "-" in der Spalte "µ" bedeutet, daß es auf die Information bezüglich des Reibungskoeffizienten p nicht ankommt. In der vierten Spalte "a"' ist angegeben, wie die Bremsanforderung a durch die Kontrolleinheit 20 modifiziert wird.

Wenn sowohl ABS als auch ESP funktionsfähig sind, wird die Bremsanforderung a unverändert an die Bremseinheit 12 weitergeleitet (a' = a). Wenn mindestens eine der Regeleinrichtungen ABS und ESP abgeschaltet oder defe kt ist und keine Information über den Reibungskoeffizienten p verfügbar ist, wird die Bremsanforderung a unterdrückt (a' = 0). Auf diese Weise wird in den Fällen, in denen die dynamische Stabilität des Fahrzeugs durch das Stabilitätssystem 14 nicht gewährl eistet werden kann, verhindert, daß die Auslöseeinheit 10 einen Bremsvorgang auslöst. Bevorzugt wird zusätzlich ein Warnsignal (beispielsweise ein optisches oder akustisches Signal) an den Fahrer ausgegeben, um den Fahrer darüber zu informieren, daß die Funktionen der Auslöseeinheit bzw. des zugehörigen Assistenzsystems nicht oder nicht in vollem Umfang zur Verfügung stehen.

Wenn mindestens eine der Regeleinrichtungen ABS und ESP abgeschaltet oder defekt ist, aber Information über den Reibungskoeffizienten p verfügbar ist, so wird die Bremsanforderung a nur dann unverändert an die Bremseinheit 12 weitergeleitet, wenn diese Bremsanforderung kleiner ist als ein bestimmter Grenzwert (alim1(µ), alim2(µ) oder alim3(µ)), der vom Reibungskoeffizienten p abhängig ist. Wenn a größer ist als dieser Grenzwert, wird als modifizierte Bremsanforderung a' lediglich der betreffende Grenzwert an die Bremseinheit 12 weitergeleitet (a' = min(a, alim1(µ)), etc.). Die Grenzwerte können dabei von der Art und Anzahl der festgestel lten Defekte abhängig sein und sind so gewählt, daß die Fahrstabilität trotz der eingeschränkten Funktion des Stabilitätssystems 14 gewährleistet werden kann. Gegebenenfalls können die Grenzwerte auch von weiteren fahrdynamischen Größen, beispielsweise von der Fahrzeuggeschwindigkeit V abhängig sein, oder die Modifikation kann eine komplexere Funktion der Größen a, p und der übrigen fahrdynamischen Größen sein. Auf diese Weise wird in jeder Situation ein optimaler Kompromiß zwischen Fahrstabilität und Funktionsumfang des Assistenzsystems gewährleistet.

## Patentansprüche

1. Brems-Steuersystem für Kraftfahrzeuge, mit einem Stabilitätssystem (14) zur fahrdynamischen Stabilisierung des Fahrzeugs bei Bremsvorgängen, einer Auslöseeinheit (10) zur automatischen Ausgabe einer Bremsanforderung (a) in Abhängigkeit von der Verkehrssituation, und einer Bremseinheit (12), die die Bremsanforderung in eine Bremsaktion umsetzt, und einer Kontrolleinheit (20), die die Bremsanforderung (a) vor ihrer Umsetzung in Abhängigkeit vom Zustand des Stabilitätssystems (14) modifiziert, **dadurch gekennzeichnet, daß** die Modifikation der Bremsanforderung (a) bei nicht voll funktionsfähigem Stabilitätssystem (14) darin besteht, daß die Bremsanforderung vollständig unterdrückt wird.

2. Brems-Steuersystem nach Anspruch 1, **dadurch gekennzeichnet, daß** die Kontrolleinheit (20) in die Auslöseeinheit (10) integriert ist.

3. Brems-Steuersystem nach Anspruch 1, **dadurch gekennzeichnet, daß** die Kontrolleinheit (20) in die Bremseinheit (12) integriert ist.

4. Brems-Steuersystem nach Anspruch 1, **dadurch gekennzeichnet, daß** die Kontrolleinheit (20) über eine Kommunikationseinrichtung (24) mit der Auslöseeinheit (10) und/oder der Bremseinheit (12) in Verbindung steht.

## Claims

1. Brake control system for motor vehicles, having a stability system (14) for vehicle movement dynamics stabilization of the vehicle during braking processes, a triggering unit (10) for automatically outputting a braking request (a) as a function of the traffic situation, and a brake unit (12) which converts the braking request into a braking action, and a monitoring unit (20) which modifies the braking request (a) as a function of the state of the stability system (14) before the implementation of said braking request (a), **characterized in that**, when the stability system (14) is not fully functionally capable, the modification of the braking request (a) consists in the braking request being completely suppressed.

2. Brake control system according to Claim 1, **characterized in that** the control unit (20) is integrated into the triggering unit (10).

3. Brake control system according to Claim 1, **characterized in that** the control unit (20) is integrated into the brake unit (12).

4. Brake control system according to Claim 1, **characterized in that** the control unit (20) is connected to the triggering unit (10) and/or the brake unit (12) via a communication device (24).

## Revendications

1. Système de commande de freinage pour véhicules automobiles, comprenant un système de stabilisation (14) pour la stabilisation dynamique de conduite du véhicule lors d'opérations de freinage, une unité de déclenchement (10) pour émettre automatiquement une demande de freinage (a) en fonction de la situation du trafic, une unité de freinage (12) qui convertit la demande de freinage en une action de freinage, et une unité de contrôle (20) qui modifie la demande de freinage (a) avant sa conversion en fonction de l'état du système de stabilisation (14), **caractérisé en ce que** la modification de la demande de freinage (a) lorsque le système de stabilisation (14) n'est pas complètement fonctionnel consiste à supprimer complètement la demande de freinage.

2. Système de commande de freinage selon la revendication 1, **caractérisé en ce que** l'unité de contrôle (20) est intégrée dans l'unité de déclenchement (10).

3. Système de commande de freinage selon la revendication 1, **caractérisé en ce que** l'unité de contrôle (20) est intégrée dans l'unité de freinage (12).

4. Système de commande de freinage selon la revendication 1, **caractérisé en ce que** l'unité de contrôle (20) est en liaison par le biais d'un dispositif de communication (24) avec l'unité de déclenchement (10) et/ou l'unité de freinage (12).
